# EUROPEAN PATENT SPECIFICATION

(11) **EP 0 933 025 B1**
(45) Date of publication and mention of the grant of the patent: **04.08.2004**
(21) Application number: 99300333.4
(22) Date of filing: 19.01.1999
(51) Int. Cl.: A01N 25/02

(54) **Emulsifiable concentrate containing one or more pesticides**
Ein oder mehrere Schädlingsbekämpfungsmittel enthaltendes Emulsionskonzentrat
Concentré émulsifiable contenant un ou plusieurs pesticides

(30) Priority: 20.01.1998 US 8952; 20.01.1998 US 8819
(43) Date of publication of application: 04.08.1999
(73) Proprietor: BASF AKTIENGESELLSCHAFT, 67056 Ludwigshafen (DE)
(72) Inventor: Aven, Michael, 55131 Mainz (DE); Cotter, Henry van Tuyl, Trenton, New Jersey 08618 (US)
(74) Representative: Langfinger, Klaus Dieter, Dr.

(56) References cited:
- EP-A- 0 253 374
- EP-A- 0 394 847
- EP-A- 0 839 448
- WO-A-91/08665
- WO-A-98/16102

## Description

### BACKGROUND OF THE INVENTION

Emulsifiable concentrate (EC) formulations conventionally contain an active ingredient, one or more surfactants which act as emulsifiers upon dilution with water and a water immiscible solvent. Typical solvents for conventional EC formulations are aromatic hydrocarbons as for example xylene, Shellsol A or Solvesso 200. These solvents have very low solubilities in water and a high capability of dissolving a wide range of active ingredients.

Due to the presence of the solvent, many pesticides formulated as EC formulations have advantages such a higher degree of systemicity and overall activity compared to the same pesticide formulated as a wettable powder (WP), water dispersible granule (WG) or suspension concentrate (SC). However, the solvents used in the conventional EC formulations can damage the environment or may cause toxicity problems.

The International Patent Application WO 96/01047 discloses ECs containing pyrethroids, esters of plant oils, a water-immiscible cosolvent and emulsifying surfactants. However, there is no disclosure of EC formulations containing water-miscible cosolvents.

Example 3 of the International Patent Application WO 98/00008 discloses an EC consisting of a fungicide, three different kinds of non-ionic surfactants, a cosolvent and an ester of a plant oil. However, this example cannot enable the skilled worker to produce such a formulation since its components do not add up to 100 percent.

### SUMMARY OF THE INVENTION

The present invention provides a novel emulsifiable concentrate (EC) formulation containing at least one pesticidal active ingredient, a solvent which essentially consists of one or more esters of plant oils, a cosolvent selected from the class of water-miscible, polar aprotic solvents, and an emulsifying surfactant system forming an oil in water emulsion when the formulation is added to water, which comprises one or more anionic surfactants and one or more non-ionic surfactants. The new EC shows an excellent selective pesticidal activity in various crops.

It is an object of the present invention to provide novel, pesticidal ECs.

It is also an object of the invention to provide methods for controlling fungus by contacting plants with a pesticidally effective amount of the new EC.

It is another object of the invention to provide selective pesticidal compositions obtainable by emulsifying the new ECs in water.

These and other objects and features of the invention will be more apparent from the detailed description set forth hereinbelow, and from the appended claims.

### DETAILED DESCRIPTION OF THE PREFERRED EMBODIMENTS

It has surprisingly been found that improved stable EC formulations of pesticidal active ingredients can be produced using
- a solvent which essentially consists of one or more esters of plant oils,
- a cosolvent selected from the class of water-miscible polar aprotic solvents, and
- an emulsifying surfactant system capable of forming an oil in water emulsion when the formulation is added to water, which comprises one or more anionic surfactants and one or more non-ionic surfactants.

The use of the water-miscible polar aprotic solvent, in particular γ-butyrolactone, is essential to incorporate sufficient amounts of the pesticidal active ingredient in the EC.

In the definitions of the new EC formulations, a pesticide is a synthetic or natural compound which has the capability of inhibiting the growth of phytopathogenic fungi or of controlling a plant disease or has the capability to control undesired weeds or insects on crops.

The new ECs contain at least one pesticide, preferably one, two or three pesticides, in particular fungicides or herbicides.

The fungicidal compounds can be, for example, those which are capable of combating ear diseases of cereals (e.g. wheat) such as Septoria, Gibberella and Helminthosporium spp., seed and soil borne diseases, downy and powdery mildews on vines, and powdery mildew and scab on apples, etc. Mixtures of fungicidal compounds can have a broader spectrum of activity than a single compound alone. Furthermore, the mixtures of fungicides can exhibit a synergistic effect compared with the single active ingredients.

Preferred fungicides are commercially available compounds selected from the group consisting of:

AC 382042, anilazine, azoxystrobin, benalaxyl, benomyl, binapacryl, bitertanol, blasticidin S, Bordeaux mixture, bromuconazole, bupirimate, captafol, captan, carbendazim, carboxin, carpropamid, chlorbenzthiazon, chlorothalonil, chlozolinate, copper-containing compounds such as copper oxychloride, and copper sulfate, cycloheximide, cymoxanil, cypofuram, cyproconazole, cyprodinil, dichlofluanid, dichlone, dichloran, diclobutrazol, diclocymet, diclomezine, diethofencarb, difenoconazole, diflumetorim, dimethirimol, dimethomorph, diniconazole, dinocap, ditalimfos, dithianon, dodemorph, dodine, edifenphos, epoxiconazole, etaconazole, ethirimol, etridiazole, famoxadone, fenapanil, fenamidone, fenarimol, fenbuconazole, fenfuram, fenhexamid, fenpiclonil, fenpropidin, fenpropimorph, fentin, fentin acetate, fentin hydroxide, ferimzone, fluazinam, fludioxonil, flumetover, fluquinconazole, flusilazole, flusulfamide, flutolanil, flutriafol, folpet, fosetyl-aluminium, fuberidazole, furalaxyl, furametpyr, guazatine, hexaconazole, IKF-916, imazalil, iminoctadine, ipconazole, iprodione, isoprothiolane, iprovalicarb, kasugamycin, KH-7281, kitazin P, kresoxim-methyl, mancozeb, maneb, mepanipyrim, mepronil, metalaxyl, metconazole, methfuroxam, MON 65500, myclobutanil, neoasozin, nickel dimethyldithiocarbamate, nitrothalisopropyl, nuarimol, ofurace, organo mercury compounds, oxadixyl, oxycarboxin, penconazole, pencycuron, phenazineoxide, phthalide, polyoxin D, polyram, probenazole, prochloraz, procymidione, propamocarb, propiconazole, propineb, pyrazophos, pyrifenox, pyrimethanil, pyroquilon, pyroxyfur, quinomethionate, quinoxyfen, quintozene, spiroxamine, SSF-126, SSF-129, streptomycin, sulfur, tebuconazole, tecloftalame, tecnazene, tetraconazole, thiabendazole, thifluzamide, thiophanate-methyl, thiram, tolclofosmethyl, tolylfluanid, triadimefon, triadimenol, triazbutil, triazoxide, tricyclazole, tridemorph, trifloxystrobin, triflumizole, triforine, triticonazole, validamycin A, vinclozolin, XRD-563, zarilamid, zineb, ziram, and in particular metconazole, triadimenol or prochloraz.

Moreover, the EC formulations according to the invention may contain a chemical agent that induces the systemic acquired resistance in plants such as for example nicotinic acid or derivatives thereof, 2,2-dichlorocyclopropane carboxylic acid or BION.

These fungicidal compounds are mostly known from "The Pesticide Manual", 11th Edition, The British Crop Protection Council and The Royal Society of Chemistry, 1997, (hereinbelow abbreviated as "Pesticide Manual").

Furthermore preferred are derivatives of fused pyrimidines which are disclosed for example by the European patent applications EP-A-0 071 792 and the US Patent US 5,593,996, in particular those of formula I: 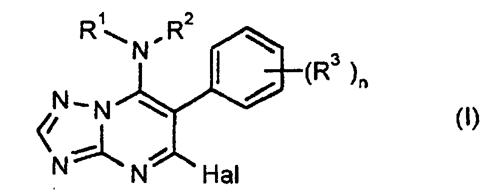 in which
R¹ and R² each independently represent hydrogen or an optionally substituted alkyl, alkenyl, alkynyl, alkadienyl, haloalkyl, aryl, heteroaryl, cycloalkyl, bicycloalkyl or heterocyclyl group, or
R¹ and R² together with the interjacent nitrogen atom represent an optionally substituted heterocyclic ring,
R³ represents a halogen atom or an alkyl or alkoxy group,
n represents an integer from 0 to 5, and
Hal represents a halogen atom.

Particularly preferred are 5-chloro-6-(2-chloro-6-fluorophenyl)-7-(4-methylpiperid-1-yl)-[1,2,4]triazolo[1,5-a]pyrimidine coded Fused Pyrimidine A or 5-chloro-6-(2,4,6-trifluorophenyl)-7-N-(1,1,1-trifluoroprop-2-yl)-[1,2,4]triazolo[1,5-a]pyrimidine coded Fused Pyrimidine B.

Another group of preferred fungicidal compounds are the benzoylbenzenes disclosed by EP-A-0 727 141, in particular those of formula II 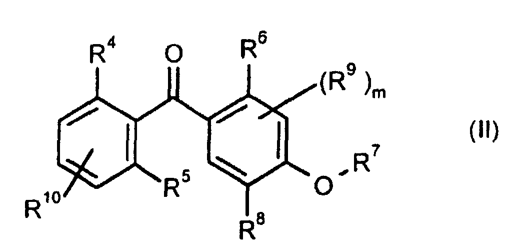 wherein
R⁴ represents a chloro atom or a methyl group;
R⁵ represents a chloro atom or an alkyl or alkoxy group;
R⁶ represents a halogen atom, an optionally substituted alkyl, alkoxy, alkenyl, alkylthio, alkylsulfinyl, alkylsulfonyl, cyano, carboxy, hydroxy, nitro or an optionally substituted amino group;
R⁷ represents a hydrogen atom or an optionally substituted alkyl or acyl group;
R⁸ represents a hydrogen or a halogen atom, an optionally substituted alkyl, alkoxy, alkenyloxy, alkynyloxy, alkylthio, cycloalkyl, cycloalkyloxy, group;
m is an integer of 1 or 2;
R⁹ independently represents an optionally substituted alkoxy or OC(O)R¹¹ group, in which R¹¹ represents an alkyl group; and
R¹⁰ represents a hydrogen or halogen atom or an alkyl or alkoxy group.

Particularly preferred is 2'-n-butoxy-2,6-dichloro-3',4'-dimethoxy-6'-methylbenzophenone coded Benzoylbenzene A or 5-bromo-2',6-dimethyl-2,4',5',6'-tetramethoxymethoxybenzophenone coded Benzophenone B.

The herbicidal compounds can be, for example, compounds which possess a high herbicidal activity within a wide concentration range and/or at low dosages, and may be used in agriculture without any difficulties, in particular for the selective control of undesired plants such as Alopecurus myosuroides, Echinochloa crus-galli, Setaria viridis, Galium aparine, Stellaria media, Veronica persica, Lamium purpureum, Viola arvensis, Abutilon theophrasti, Ipomoea purpurea and Amaranthus retroflexus by pre- and post-emergence application, particularly in certain crops such as maize and rice.

Preferred herbicides are the commercially available compounds selected from the group consisting of:

2,4-D, 2,4-DB, 2,4-DP, acetochlor, acifluorfen, alachlor, alloxydim, ametrydione, amidosulfuron, asulam, atrazin, azimsulfuron, benfuresate, bensulfuron, bentazon, bifenox, bromobutide, bromoxynil, butachlor, cafenstrole, carfentrazone, chloridazon, chlorimuron, chlorpropham, chlorsulfuron, chlortoluron, cinmethylin, cinosulfuron, clomazone, clopyralid, cyanazin, cycloate, cyclosulfamuron, cycloxydim, daimuron, desmedipham, di-methazone, dicamba, dichlobenil, diclofop, diflufenican, dimethenamid, dithiopyr, diuron, eptame, esprocarb, ethiozin, fenoxaprop, flamprop-M-isopropyl, flamprop-M-methyl, fluazifop, fluometuron, fluoroglycofen, fluridone, fluroxypyr, flurtamone, fluthiamid, fomesafen, glufosinate, glyphosate, halosafen, haloxyfop, hexazinone, imazamethabenz, imazamethapyr, imazamox, imazapyr, imazaquin, imazethapyr, ioxynil, isoproturon, isoxaben, isoxaflutole, lactofen, MCPA, MCPP, mefenacet, metabenzthiazuron, metamitron, metazachlor, methyldimron, metolachlor, metribuzin, metsulfuron, molinate, nicosulfuron, norflurazon, oryzalin, oxadiargyl, oxasulfuron, oxyfluorfen, pendimethalin, picloram, picolinafen, pretilachlor, propachlor, propanil, prosulfocarb, pyrazosulfuron, pyridate, qinmerac, quinchlorac, quizalofopethyl, sethoxydim, simetryne, sulcotrione, sulfentrazone, sulfosate, terbutryne, terbutylazin, thiameturon, thifensulfuron, thiobencarb, tralkoxydim, triallate, triasulfuron, tribenuron, triclopyr, trifluralin.

Mixtures of the above mentioned herbicides or mixtures of herbicides with other active ingredients like fungicides, insecticides, acaricides, and nematicides are possible.

These herbicidal compounds are mostly known from "The Pesticide Manual".

Furthermore preferred are derivatives of aryloxyazoles which are disclosed for example by the European patent applications EP 0 447 004, EP 0 572 093 or EP 0 723 960 and the International Patent Applications WO 94/22833 or WO 94/27974, in particular those of formula III: 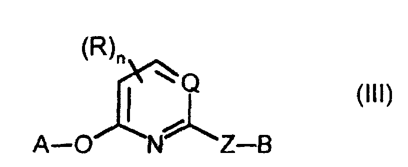 in which
A and B each independently represent an optionally substituted aryl or heteroaryl group,
R each independently represents a hydrogen or halogen atom or an optionally substituted alkyl, alkoxy, alkenyl, alkynyl, alkadienyl, haloalkyl, cyano or nitro group,
Q represents N or CR,
Z represents -O-, -S-, -CONH- or a single bond, and
n represents 0, 1 or 2.

Particularly preferred is N-(4-fluorophenyl) 2-(3-trifluoromethylphenoxy)-pyrid-6-ylcarboxamide coded PYNPOP-1 or 5-methyl-4-(3-trifluoromethylphenoxy)-2-(4-trifluoromethylphenyl)-pyrimidine coded PYPOP-1.

Esters of plant oils, which are used as nonpolar, water immiscible solvents according to the present invention, are as a rule alkyl esters obtainable from medium chained fatty acids by esterification with alkanols or by transesterification of the corresponding plant oils preferably in the presence of a lipase. Preferred fatty acids of these plant oils have 5 to 20, in particular 6 to 15 carbon atoms. As a rule they are mixtures of fatty acids having different chain lengths, mixtures in which the main component, i.e. more than 50 percent of said mixture, has 8 or 10 carbon atoms are particularly preferred. In a preferred embodiment the methyl ester of the plant oil used is the methyl ester of caprylic / capric ester or of capric ester having less than 5 percent of fatty acids having chain lengths different from 8 or 10.

Particularly preferred methyl esters of plant oils are Witconol® 1095 and Witconol® 2309 which are commercially available from the Witco Corporation, Houston, Texas, USA.

The water-miscible polar aprotic solvents used as cosolvents are necessary to increase the amount of the active ingredient. Without these cosolvents relatively small amounts of the active ingredient are soluble in the EC and the resulting formulation may show phytotoxicity due to the increased amount of solvent applied to the plant. Preferred polar solvents are compounds which exhibit a dielectric constant of 2.5 or more at 25 °C, in particular from 2.7 to 4.0 at 25 °C. Preferred are alcohols such as benzyl alcohol, ketones, alkylene carbonates such as ethylene carbonate and propylene carbonate, amides, in particular cyclic amides and lactones as for example N-methylpyrrolidone, γ-butyrolactone, N-cyclohexylpyrrolidone, and cyclohexanone. Most preferred is γ-butyrolactone.

The emulsifying surfactant system forming an oil in water emulsion when the formulation is added to water is as a rule a mixture of two or more surfactants. Suitable surface-active substances may be nonionic, anionic or cationic surfactants with good dispersing, emulsifying and wetting properties depending on the nature of the pesticidal compound to be formulated. Surfactants may also mean mixtures of surfactants.

Suitable surfactants may be so-called water-soluble soaps as well as synthetic surface-active compounds. Soaps usually are alkali, earth alkali or optionally substituted ammonium salts of higher fatty acids (C₁₀-C₂₀), e.g. the sodium or potassium salts of oleic or stearic acid or of mixtures of natural fatty acids which are prepared, for example, from coconut or tallow oil. Furthermore, methyl-taurine salts of fatty acids may be used. However, so-called synthetic surfactants are preferably used, especially fatty sulfonates, fatty sulfates, sulfonated benzimidazole derivatives or alkyl aryl sulfonates. The fatty sulfates or fatty sulfonates are normally used as alkali, earth alkali or optionally substituted ammonium salts and have an alkyl moiety of 8 to 22 carbon atoms, whereby alkyl also means the alkyl moiety of acyl residues, such as the sodium or calcium salt of lignin sulfonic acid, of sulfuric acid dodecylate or of a mixture of fatty alcohols prepared from natural fatty acids. This also includes the salts of sulfuric acid esters, sulfonic acids and adducts of fatty alcohols and ethylene oxide. The sulfonated benzimidazole derivatives preferably contain 2 sulfonic acid residues and a fatty acid residue with 8 to 22 carbon atoms. Alkyl aryl sulfonates are, for example, the sodium, calcium or triethyl ammonium salts of dodecyl benzene sulfonic acid, dibutyl naphthalene sulfonic acid or of a condensate of naphthalene sulfonic acid and formaldehyde. Furthermore, phosphates, such as the salts of the phosphoric acid ester of a p-nonylphenol-(4-14)-ethylene oxide adduct or phospholipids, may be used. Most preferred anionic surfactants are the sodium, calcium or triethyl ammonium salts of dodecyl benzene sulfonic acid, in particular Sponto® AD11-1A (a mixture of dodecyl benzene sulfonate, an alkyl ethoxylate and isobutanol) of Witco SA, Saint-Pierre les Elbeuf, France Rhodocal® 70/B (70 % linear dodecyl benzene sulfonate in n-butanol) of Rhodia GmbH (former Rhône-Poulenc), Phenylsulfonat CA 100 (40 % branched calcium linear dodecyl benzene sulfonate in Solvesso 200) of Clariant GmbH (former Hoechst AG) or Nansa® EVM 70/2E (57 % linear dodecyl benzene sulfonate in 2-ethylhexanol) of Albright & Wilson.

Non-ionic surfactants are preferably polyglycolether derivatives of aliphatic or cycloaliphatic alcohols, saturated or non-saturated fatty acids and alkylphenols, which have 3 to 10 glycol ether groups and 8 to 20 carbon atoms in the (aliphatic) hydrocarbon residue and 6 to 18 carbon atoms in the alkyl residue of the alkyl phenols. Other suitable non-ionic surfactants are the water-soluble, 20 to 250 ethylene glycol ether groups containing polyadducts of ethylene oxide and polypropylene glycol, ethylene diamino polypropylene glycol and alkyl polypropylene glycol with 1 to 10 carbon atoms in the alkyl moiety, the substances normally contain 1 to 5 ethylene glycol units per propylene glycol unit. Examples of non-ionic surfactants are nonylphenol polyethoxy ethanols, castor oil polyglycol ethers, polyadducts of ethylene oxide and polypropylene, tributyl phenoxy polyethoxy ethanol, octyl phenoxy polyethoxy ethanol. Preferred are fatty acid esters of polyoxy ethylene sorbitan, such as polyoxy ethylene sorbitan trioleate, in particular Witconol® AL69-66 of Witco SA, Saint-Pierre les Elbeuf, France.

Furthermore preferred are ethoxylated fatty acids such a castor or canola oil ethoxylates having at least 25, preferably 27 to 37 ethoxy units, such as Sunaptol® CA350 (castor oil ethoxylate with 35 ethoxy units) of ICI surfactants, Mergital® EL33 (castor oil ethoxylate with 33 ethoxy units) of Henkel KGaA, Eumulgin® CO3373 (canola oil ethoxylate with 30 ethoxy units) of Henkel KGaA.

Furthermore preferred are alcohol ethoxylates, in particular Atplus® MBA 11/7 (monobranched C₁₁ alcohol ethoxylate with 7 ethoxy units) of ICI surfactants.

Cationic surfactants preferably are quaternary ammonium salts, which have at least one alkyl residue with 8 to 22 carbon atoms and, furthermore, low, optionally-halogenated alkyl, benzyl or hydroxyalkyl residues. The salts are preferably halides, methyl sulfates or alkyl sulfates, e.g. stearyl trimethyl ammonium chloride or benzyl bis(2-chloroethyl) ethyl ammonium bromide.

As a rule the surfactant system according to the present invention consists of one anionic surfactant and one or two non-ionic surfactant, preferably the non-ionic surfactants is an ethoxylated sorbitol oleate or an ethoxylated oil.

The surfactants generally used for compositions of the invention are disclosed in publications such as:
"McCutcheon's Detergents and Emulsifiers Annual", MC Publishing Corp., Ridgewood, NJ, USA 1981;
H. Stache, "Tensid-Taschenbuch", 2nd ed., C. Hanser, Munich, Vienna, 1981;
M. and J. Ash, "Encyclopedia of Surfactants", vol. I-III, Chemical Publishing Co., New York, NY, USA 1980-1981.

In particular preferred surfactants are commercially available Witconol® AL69-66 and Sponto® AD11-1A, both from Witco SA, Saint-Pierre les Elbeuf, France.

Preferred embodiments of the invention include :
(a) An EC comprising
   - 10 to 500 g/l, in particular 90 to 400 g/l of at least one pesticide,
   - 200 to 800 g/l of the solvent which consists of one or more esters of plant oils,
   - 10 to 400 g/l, in particular 75 to 300 g/l of the cosolvent selected from the class of water-miscible polar aprotic solvents, and
   - 50 to 300 g/l of the emulsifying surfactant system, which consists essentially of
      - 10 to 150 g/l of one or more anionic surfactants and
      - 10 to 150 g/l by weight of one or two non-ionic surfactants.
(b) An EC wherein said fungicide is a commercialized fungicide, a benzoylbenzene or a fused pyrimidine derivative.
(c) An EC wherein said ester is a methyl ester obtained from palm oil, in particular methyl caprylate, which is commercially available as Witconol 2309 or Witconol 1095.
(d) An EC wherein the said cosolvent is selected from the group consisting of N-methylpyrrolidone, γ-butyrolactone, cyclohexanone and benzyl alcohol, in particular γ-butyrolactone.
(e) An EC wherein said emulsifying surfactant system a mixture of anionic and non-ionic surfactants, in a mixture of particular commercially available Witconol® AL 69-66 and Sponto® AD 11-1 A.
(f) An EC consisting essentially of
   - 10 to 500 g/l, in particular 100 to 500 g/l of at least one pesticide,
   - 300 to 750 g/l, in particular 500 to 750 g/l of a solvent being a methyl ester obtained from plant oil, in particular obtained from palm kernel oil
   - 50 to 350 g/l, in particular 75 to 200 g/l of the cosolvent selected from the group consisting of N-methylpyrrolidone, γ-butyrolactone, N-cyclohexylpyrrolidone, cyclohexanone and benzyl alcohol,
   - 50 to 250 g/l, in particular 100 to 250 g/l of the emulsifying surfactant system being a mixture of anionic and non-ionic surfactants, and
   - optionally a stabilizing agent and/or antioxidant.

In an especially preferred embodiment the formulation according to the present invention contains
- 10 to 100 g/l of a fused pyrimidine of formula I,
- 100 to 500 g/l of a benzoylbenzene of formula II,
- 100 to 500 g/l of a commercially available fungicide such as metconazole, triadimenol or prochloraz,
- 20 to 200 g/l of a aryloxyazole of formula III, or
- 40 to 500 g/l of a commercially available herbicide such as cyanazine, imazamox, isoproturon or pendimethalin.

The solubility of the active ingredients in the formulation according to the invention depends not only on the structure of the active ingredient but also on the amount of the cosolvent. The relative amount of active ingredient increases by about 40 to 60 % when 10 to 15 % cosolvent is incorporated into the formulation.

Furthermore, the invention relates to a method of combating pests at a locus which comprises treating the locus with a composition obtained from emulsifying an EC according to the invention in water.

Moreover, the invention relates to the use of an EC according to the invention as a pesticide.

As commodities, the inventive pesticidal ECs may preferably be in a concentrated form whereas the end-user generally employs diluted compositions. Said compositions may be diluted to concentrations down to 0.001% of active ingredient (a.i.). The doses usually are in the range of about 0.01 to 10 kg a.i./ha.

The said compositions may also comprise other auxiliaries such as stabilizers, defoamers, viscosity controlling agents, thickeners, adhesives, fertilizers or other active pesticide ingredients to obtain special effects.

For a clearer understanding of the invention, specific examples are set forth below. These examples are merely illustrations and are not to be understood as limiting the scope and underlying principles of the invention in any way. Indeed, various modifications of the invention in addition to those shown and described herein will become apparent to those skilled in the art from the following examples and foregoing description. Such modifications are also intended to fall within the scope of the appended claims.

The recipes of the formulations of the following examples represent the maximum amount of active ingredient that can be dissolved in the formulation with and without cosolvent (at +10 °C).

### Example 1

An EC formulation is prepared containing:

| **Ingredient** | **Concentration** | **Concentration** |
|---|---|---|
| Fused Pyrimidine A | 44 g | 6 g |
| Sponto AD11-1A | 50 g | 50 g |
| Witconol AL69-66 | 50 g | 50 g |
| γ-butyrolactone | 200 g | - |
| Witconol 1095 | to 1 litre | to 1000 ml |
| Density | 0.96 g/ml | 0.89 g/ml |

### Example 2

An EC formulation is prepared containing:

| **Ingredient** | **Concentration** | **Concentration** |
|---|---|---|
| Benzoylbenzene A | 290 g | 130 g |
| Sponto AD11-1A | 50 g | 50 g |
| Witconol AL69-66 | 50 g | 50 g |
| γ-butyrolactone | 200 g | - |
| Witconol 1095 | to 1 litre | to 1000 ml |
| Density | 1.04 g/ml | 0.94 g/ml |

### Example 3

An EC formulation is prepared containing:

| **Ingredient** | **Concentration** | **Concentration** |
|---|---|---|
| Metconazole 85/15 | 160 g | 90 g |
| Sponto AD11-1A | 50 g | 50 g |
| Witconol AL69-66 | 50 g | 50 g |
| γ-butyrolactone | 150 g | - |
| Witconol 1095 | to 1000 ml | to 1000 ml |
| Density | 0.96 g/ml | 0.91 g/ml |

### Example 4

An EC formulation is prepared containing:

| **Ingredient** | **Concentration** | **Concentration** |
|---|---|---|
| Metconazole 85/15 | 160 g | 90 g |
| Rhodocal 70/B | 50 g | 50 g |
| Sunaptol CA350 | 50 g | 50 g |
| γ-butyrolactone | 150 g | - |
| Witconol 1095 | to 1000 ml | to 1000 ml |
| Density | 0.97 g/ml | 0.92 g/ml |

### Example 5

An EC formulation is prepared containing:

| **Ingredient** | **Concentration** | **Concentration** |
|---|---|---|
| Metconazole 85/15 | 160 g | 90 g |
| Phenylsulfonat CA 100 | 50 g | 50 g |
| Emulgin CO3373 | 50 g | 50 g |
| γ-butyrolactone | 150 g | - |
| Witconol 1095 | to 1000 ml | to 1000 ml |
| Density | 0.95 g/ml | 0.90 g/ml |

### Example 6

An EC formulation is prepared containing:

| **Ingredient** | **Concentration** | **Concentration** |
|---|---|---|
| Triadimenol | 85 g | 40 g |
| Witconol AL69-66 | 50 g | 50 g |
| Sponto AD 11-1A | 50 g | 50 g |
| γ-butyrolactone | 200 g | - |
| Witconol 1095 | to 1000 ml | to 1000 ml |
| Density | 0.97 g/ml | 0.91 g/ml |

### Example 7

An EC formulation is prepared containing:

| **Ingredient** | **Concentration** | **Concentration** |
|---|---|---|
| Prochloraz | 480 g | 200 g |
| Witconol AL69-66 | 50 g | 50 g |
| Sponto AD 11-1A | 50 g | 50 g |
| γ-butyrolactone | 100 g | - |
| Witconol 1095 | to 1000 ml | to 1000 ml |
| Density | 1.14 g/ml | 1.01 g/ml |

### Example 8

An EC formulation is prepared containing:

| **Ingredient** | **Concentration** | **Concentration** |
|---|---|---|
| Imazamox | 64 g | 14 g |
| Sponto AD11-1A | 50 g | 50 g |
| Witconol AL69-66 | 50 g | 50 g |
| γ-butyrolactone | 200 g | - |
| Witconol 1095 | to 1000 ml | to 1000 ml |
| Density | 0.94 g/ml | 0.89 g/ml |

### Example 9

An EC formulation is prepared containing:

| **Ingredient** | **Concentration** | **Concentration** |
|---|---|---|
| Imazamox | 64 g | 14 g |
| Phenylsulfonat CA 100 | 50 g | 50 g |
| Atplus MBA 11/7 | 50 g | 50 g |
| γ-butyrolactone | 200 g | - |
| Witconol 1095 | to 1000 ml | to 1000 ml |
| Density | 0.93 g/ml | 0.88 g/ml |

### Example 10

An EC formulation is prepared containing:

| **Ingredient** | **Concentration** | **Concentration** |
|---|---|---|
| Isoproturon | 120 g | 35 g |
| Sponto AD11-1A | 50 g | 50 g |
| Witconol AL69-66 | 50 g | 50 g |
| γ-butyrolactone | 200 g | - |
| Witconol 1095 | to 1000 ml | to 1000 ml |
| Density | 0.94 g/ml | 0.89 g/ml |

### Example 11

An EC formulation is prepared containing:

| **Ingredient** | **Concentration** | **Concentration** |
|---|---|---|
| Cyanazine | 70 g | 18 g |
| Sponto AD11-1A | 50 g | 50 g |
| Witconol AL69-66 | 50 g | 50 g |
| γ-butyrolactone | 150 g | - |
| Witconol 1095 | to 1000 ml | to 1000 ml |
| Density | 0.96 g/ml | 0.90 g/ml |

### Example 12

An EC formulation is prepared containing:

| **Ingredient** | **Concentration** | **Concentration** |
|---|---|---|
| Pendimethalin | 310 g | 260 g |
| Witconol AL69-66 | 50 g | 50 g |
| Sponto AD 11-1A | 50 g | 50 g |
| γ-butyrolactone | 200 g | - |
| Witconol 1095 | to 1000 ml | to 1000 ml |
| Density | 1.01 g/ml | 0.96 g/ml |

### Example 13

An EC formulation is prepared containing:

| **Ingredient** | **Concentration** | **Concentration** |
|---|---|---|
| PYNPOP-1 | 170 g | 80 g |
| Witconol AL69-66 | 50 g | 50 g |
| Sponto AD 11-1A | 50 g | 50 g |
| γ-butyrolactone | 150 g | - |
| Witconol 1095 | to 1000 ml | to 1000 ml |
| Density | 0.98 g/ml | 0.92 g/ml |

### Example 14

An EC formulation is prepared containing:

| **Ingredient** | **Concentration** | **Concentration** |
|---|---|---|
| PYPOP-1 | 160 g | 100 g |
| Witconol AL69-66 | 20 g | 20 g |
| Sponto AD 11-1A | 80 g | 80 g |
| cyclohexanone | 200 g | - |
| Witconol 1095 | to 1000 ml | to 1000 ml |
| Density | 0.96 g/ml | 0.93 g/ml |

Greenhouse tests have shown that the EC formulations as above based on methyl caprylate as solvent are as active as EC's containing Solvesso 200, a conventional, commercially available solvent for EC formulations.

In addition, the efficacy of the inventive EC formulations is typically higher than that of conventional WP's or SC's in both residual and curative tests. Phytotoxicity has been negligible at typical application rates.

Moreover, the inventive EC formulations are more environmentally friendly and have improved toxicity profiles which renders the handling of these formulation safer.

## Claims

1. An EC containing
- 10 to 500 g/l of at least one fungicide
wherein said fungicide is a fused pyrimidine of the formula I: 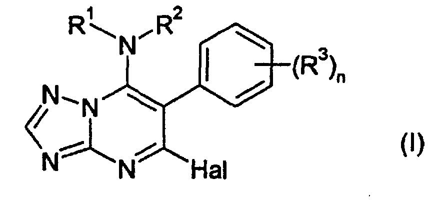 in which
R¹ and R² each independently represent hydrogen or an optionally substituted alkyl, alkenyl, alkynyl, alkadienyl, haloalkyl, aryl, heteroaryl, cycloalkyl, bicycloalkyl or heterocyclyl group, or
R¹ and R² together with the adjacent nitrogen atom represent an optionally substituted heterocyclic ring,
R3 represents a halogen atom or an alkyl or alkoxy group,
n represents an integer from 0 to 5, and
Hal represents a halogen atom
- 200 to 800 g/l of the solvent which consists of one or more methylesters of plant oils,
- 10 to 400 g/l of the cosolvent selected from the group consisting of N-methylpyrrolidone, γ-butyrolactone, cyclohexanone and benzylalcohol
- 50 to 300 g/l of the emulsifying surfactant system, which consists essentially of
- 10 to 150 g/l one or more anionic surfactants and
- 10 to 150 g/l of one or two non-ionic surfactants.

2. An EC according to claim 1 consisting essentially of
- 100 to 500 g/l of at least one fungicide,
- 300 to 750 g/l of a solvent being a methyl ester obtained from plant oil,
- 75 to 200 g/l of the cosolvent selected from the group consisting of N-methylpyrrolidone, γ-butyrolactone, cyclohexanone and benzyl alcohol,
- 100 to 250 g/l of the emulsifying surfactant system being a mixture of anionic and non-ionic surfactants, and
- optionally a stabilizing agent and/or antioxidant.

3. A method of combating pests or plant diseases caused by pests at a locus of a plant which comprises treating the locus of a plant with a composition obtained from emulsifying an EC as defined in claim 1 in water.

4. The use as a fungicide of an EC as defined in claim 1.

## Patentansprüche

1. EC, das folgendes enthält:
- 10 bis 500 g/l an mindestens einem Fungizid,
wobei es sich bei dem Fungizid um ein anelliertes Pyrimidin der Formel I 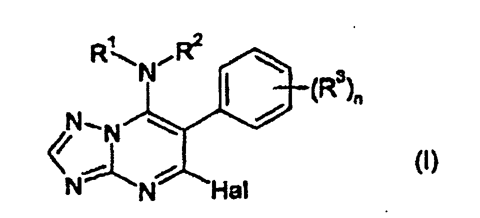 in der
R¹ und R² jeweils unabhängig Wasserstoff oder eine gegebenenfalls substituierte Alkyl-, Alkenyl-, Alkinyl-, Alkadienyl-, Halogenalkyl-, Aryl-, Heteroaryl-, Cycloalkyl-, Bicycloalkyloder Heterocyclylgruppe bedeuten oder
R¹ und R² gemeinsam mit dem benachbarten Stickstoffatom einen gegebenenfalls substituierten Heterocyclus bedeuten,
R³ ein Halogenatom oder eine Alkyl- oder Alkoxygruppe bedeutet,
n eine ganze Zahl von 0 bis 5 bedeutet und
Hal ein Halogenatom bedeutet,
handelt,
- 200 bis 800 g/l des Lösungsmittels, das aus einem oder mehreren Pflanzenölmethylestern besteht,
- 10 bis 400 g/l des Hilfslösungsmittels aus der Gruppe N-Methylpyrrolidon, γ-Butyrolacton, Cyclohexanon und Benzylalkohol,
- 50 bis 300 g/l des emulgierenden Tensidsystems, das im wesentlichen aus
- 10 bis 150 g/l an einem oder mehreren anionischen Tensiden und
- 10 bis 150 g/l an einem oder zwei nichtionischen Tensiden
besteht.

2. EC nach Anspruch 1, das im wesentlichen aus folgendem besteht:
- 100 bis 500 g/l an mindestens einem Fungizid,
- 300 bis 750 g/l eines Lösungsmittels, bei dem es sich um einen von einem Pflanzenöl stammenden Methylester handelt,
- 75 bis 200 g/l des Hilfslösungsmittels aus der Gruppe N-Methylpyrrolidon, γ-Butyrolacton, Cyclohexanon und Benzylalkohol,
- 100 bis 250 g/l des emulgierenden Tensidsystems, bei dem es sich aus einer Mischung aus anionischen und nichtionischen Tensiden handelt, sowie
- gegebenenfalls ein Stabilisierungsmittel und/oder Antioxidans.

3. Verfahren zur Bekämpfung von Schädlingen oder von durch Schädlinge verursachten Pflanzenkrankheiten am Standort einer Pflanze, **dadurch gekennzeichnet, daß** man den Standort einer Pflanze mit einer durch Emulgieren eines nach Anspruch 1 definierten ECs in Wasser erhaltenen Zusammensetzung behandelt.

4. Verwendung eines nach Anspruch 1 definierten ECs als Fungizid.

## Revendications

1. CE contenant
- 10 à 500 g/l d'au moins un fongicide
dans lequel ledit fongicide est une pyrimidine condensée répondant à la formule I: 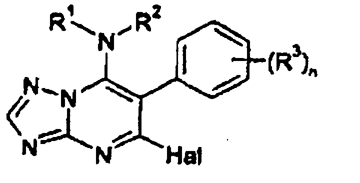 dans laquelle
R¹ et R² représentent chacun indépendamment un atome d'hydrogène ou un groupe alkyle, alcényle, alcynyle, alcadiényle, halogénoalkyle, aryle, hétéroaryle, cycloalkyle, bicycloalkyle ou hétérocyclyle facultativement substitué, ou
R¹ et R² représentent avec l'atome d'azote adjacent un cycle hétérocyclique facultativement substitué,
R³ représente un atome d'halogène ou un groupe alkyle ou alkoxy,
n représente un nombre entier compris entre 0 et 5, et
Hal représente un atome d'halogène
- 200 à 800 g/l du solvant qui comprend un ou plusieurs esters méthyliques d'huiles végétales,
- 10 à 400 g/l du cosolvant sélectionné parmi le groupe composé de N-méthylpyrrolidone, y-butyrolactone, cyclohexanone et alcool benzylique
- 50 à 300 g/l du système surfactant émulsifiant, principalement composé de
- 10 à 150 g/l de un ou plusieurs surfactants anioniques et
- 10 à 150 g/l de un ou deux surfactants non ioniques.

2. CE selon la revendication 1 composé principalement de
- 100 à 500 g/l d'au moins un fongicide
- 300 à 750 g/l d'un solvant qui est un ester méthylique obtenu à partir d'huile végétale,
- 75 à 200 g/l du cosolvant sélectionné parmi le groupe composé de N-méthylpyrrolidone, y-butyrolactone, cyclohexanone et alcool benzylique
- 100 à 250 g/l du système surfactant émulsifiant qui est un mélange de surfactants anioniques et non ioniques, et
- facultativement un agent stabilisant et/ou antioxydant.

3. Méthode visant à lutter contre les organismes nuisibles ou les maladies des plantes provoquées par les organismes nuisibles à un endroit d'une plante, qui comprend le traitement de l'endroit d'une plante au moyen d'une composition obtenue par émulsification d'un CE tel que défini dans la revendication 1 dans de l'eau.

4. Utilisation en tant que fongicide d'un CE tel que défini dans la revendication 1.
